# EUROPEAN PATENT SPECIFICATION

(11) **EP 2 496 038 B1**
(45) Date of publication and mention of the grant of the patent: **02.01.2019**
(21) Application number: 10826034.0
(22) Date of filing: 09.10.2010
(51) Int. Cl.: H04W 74/08, H04L 5/00

(54) **COMPONENT CARRIER CONFIGURATION METHOD IN CARRIER AGGREGATION AND DEVICE THEREOF**
KOMPONENTENTRÄGERKONFIGURATIONSVERFAHREN BEI DER TRÄGERZUWEISUNG UND VORRICHTUNG DAVON
PROCÉDÉ DE CONFIGURATION DE PORTEUSE COMPOSANTE EN AGRÉGATION DE PORTEUSES ET DISPOSITIF CORRESPONDANT

(30) Priority: 28.10.2009 CN 200910174412
(43) Date of publication of application: 05.09.2012
(73) Proprietor: ZTE Corporation, Shenzhen, Guangdong 518057 (CN)
(72) Inventor: SHI, Xiaojuan, Guangdong 518057 (CN); DENG, Yun, Guangdong 518057 (CN)
(74) Representative: Novagraaf Technologies
(86) International application number: PCT/CN2010/077631
(87) International publication number: WO 2011/050671

(56) References cited:
- CN-A- 101 505 538
- CN-A- 101 547 519
- CN-A- 101 646 234
- CN-A- 101 815 344
- HUAWEI: "Different Timing Advance Impact on Carrier Aggregation", 3GPP DRAFT; R2-095815 DIFFERENT TIMING ADVANCE IMPACT ON CARRIER AGGREGATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Miyazaki; 20091012, 12 October 2009 (2009-10-12), XP050390299, [retrieved on 2009-10-06]

## Description

The present invention relates to communication field, and in particular to a method and an apparatus for configuring component carriers in carrier aggregation.

In order to provide a high data rate to mobile users, the long term evolution advance ("LTE-A" for short) system provides a carrier aggregation ("CA" for short) technology for providing a broader broadband to user equipment ("UE" for short) having corresponding capability and improving a peak rate of the UE. In a long term evolution ("LTE" for short) system, the maximum downlink bandwidth supported by the system is 20MHz. By the carrier aggregation, it means that two or more component carriers ("CC" for short) are aggregated to support a transmission bandwidth of more than 20MHz and no more than 100MHz.

The component carriers can use frequency bands that have been defined by the LTE, and also can use frequency bands newly added specially for the LTE-A. Due to the shortage of the current frequency spectrum resources, it is impossible that there are always component carriers continuous in the frequency domain to be allocated to and used by operators, thus the carrier aggregation can be divided into continuous component aggregation and non-continuous carrier aggregation based on whether the component carriers are continuous in the frequency domain or not. The carrier aggregation can be divided into single band carrier aggregation and over multiple frequency bands carrier aggregation based on whether the component carriers are in the same frequency band. The so-called single band carrier aggregation means that all component carriers that participate in the carrier aggregation are located in the same frequency band, and can be continuous carrier aggregation and non-continuous carrier aggregation as well; and the so-called over multiple frequency bands carrier aggregation means that the component carriers that participate in the carrier aggregation can be originated from different frequency bands. The LTE-A UE having the carrier aggregation capability can receive and transmit data simultaneously in multiple component carriers, while the LTE UE only can receive and transmit data in a component carrier compatible with the LTE.

The component carriers can be divided into backwards-compatible component carriers and non-backwards-compatible component carriers based on whether the component carrier is compatible with the LTE system, wherein the backwards-compatible component carriers are compatible with the LTE system, and the LTE UE and the LTE-A UE can be allowed to perform an access thereon, while only the LTE-A UE is allowed to perform an access on the non-backwards-compatible component carriers. Besides, there are still extension component carriers that only can be used together with the backwards-compatible component carriers or the non-backwards-compatible component carriers, that is, the UE in an idle state is not allowed to reside on the extension component carriers which are only allowed to be allocated to and used by the LTE-A UE that has performed an access on the backwards-compatible component carriers or the non-backwards-compatible component carriers. Both LTE UE and LTE-A UE in an idle state only reside in one component carrier (it should be noted that one component carrier may have multiple cells, while the component carrier herein specially refers to a certain cell of the component carrier and is taken as a shorter from for the sake of convenience). After the LTE-A UE successfully performs an access on the component carrier, *i.e.,* after a radio resource control ("RRC" for short) connection is established on this component carrier, a base station can allocate other required components carriers to the UE through a dedicated signaling (such as RRC connection reconfiguration) according to service requirements, that is, the LTE-A UE in a connection state can communicate simultaneously with multiple component carriers that are called serving component carriers, or operating component carriers or activated component carriers.

In the LTE system, in order to realize or keep the uplink synchronization between the user equipment and the base station, the base station sends a timing advance ("TA" for short) to respective user equipment according to a transmission delay between the base station and respective user equipment, the user equipment advances or postpones the time of respective uplink transmission according the timing advance sent from the base station so as to compensate the transmission delay between a terminal of the user and the base station, thereby, all uplink signals of different pieces of user equipment arrive at the base station within the receiving window of the base station. After the carrier aggregation is introduced, the LTE-A UE supporting the carrier aggregation can operate simultaneously on multiple serving component carriers, and these component carriers can be continuous or non-continuous in the frequency band, and they can be located in the same frequency band and also can come from different frequency bands. As to the situation where the component carriers are non-continuous or the situation where the component carriers come from different frequency bands, the timing advances on respective component carriers may be different from each other since respective component carriers have different transmission properties; and even if the respective component carriers belong to the same frequency band and are continuous in the same frequency band, the timing advances in respective component carriers also may be different from each other if the respective component carriers are originated from different remote radio units ("RRU" for short). In the LTE system, the UE merely operates on one carrier (or cell) and only has one TA, as a result, all RRC processes of the existing LTE, such as RRC connection reconfiguration and handover, are only applicable to one carrier (or cell); while in the carrier aggregation, the LTE-A UE can operate simultaneously on multiple component carriers, and the TAs of these component carriers are possibly different, thus, the RRC processes in the existing LTE system obviously cannot satisfy the situation of the carrier aggregation, consequently, the configuration and mobility management of the component carriers in the carrier aggregation are urgent problems to be addressed.

An effective solution has yet not been provided in view of the fact that the RRC processes in the LTE system in the related art obviously cannot satisfy the configuration and mobility management of the component carriers in the carrier aggregation in the LTE-A.

The document "HUAWEI: 'Different Timing Advance Impact on Carrier Aggregation', 3GPP DRAFT; R2-095815 DIFFERENT TIMING ADVANCE IMPACT ON CARRIER AGGREGATION, 3RD GENERATION PARTNERSHIP PROJECT (3GPP), MOBILR VOMPETENCE CENTRE; 650, ROUTE DES LUCIOLES; F-06921 SOPHIA-ANTIPOLIS CEDEX; FRANCE, no. Miyazaki; 20091012, XP050390299" provide a related technical solution; however, the above mentioned problem still remains unsolved.

The present invention is proposed in view of the problem that the RRC processes in the LTE system cannot satisfy the configuration and mobility management of the component carriers in the carrier aggregation in the LTE-A. Therefore, the present invention provides a method and an apparatus for configuring the component carriers in the carrier aggregation to solve the above problem.

In order to achieve the object, a method for configuring component carriers in carrier aggregation is provided according to one aspect of the present invention.

The method for configuring component carriers in carrier aggregation according to the present invention comprises: user equipment (UE) receiving a configuration message of the component carriers; performing a random access on all or part of the component carriers, and determining, according to a result of the random access, whether the component carriers are successfully configured.

In the above, the configuration message comprises one of a component carrier allocation message of adding one or more component carriers, a component carrier activation message of adding one or more component carriers, a component carrier activation command of adding one or more component carriers and a handover message of handover to one or more component carriers, each message being sent from a base station to the UE.

Further, each of the component carrier allocation message of adding one or more component carriers and the component carrier activation message of adding one or more component carriers is a radio resource control (RRC) dedicated signaling, wherein configuration of each of the component carrier allocation message and the component carrier activation message includes the frequency, the physical cell identity (PCI) and/or component carrier identification information, and/or timer information of each of the one or more component carriers, and further comprises any one of dedicated random access resources, an indication of whether a timing advance is consistent with a serving component carrier, and an indication of whether random access needs to performed on the component carrier.

Further, the UE receiving the component carrier allocation message/the component carrier activation message in the configuration message of the component carriers further comprises: based on whether the component carrier allocation message/the component carrier activation message is configured with dedicated random access resources on the one or more component carriers, or based on an indication of whether a timing advance of each of the one or more component carriers in the component carrier allocation message/the component carrier activation message is consistent with a corresponding serving component carrier or based on an indication of whether random access needs to be performed on the component carrier, determining whether or not random access needs to be performed on the one or more component carriers.

Further, if said determination result is that random access needs to be performed on the one or more component carriers, the method further comprises: the UE sends a component carrier allocation completion message/a component carrier activation completion message to the base station according to a random access result on each of the one or more component carriers before a corresponding timer stops, wherein the component carrier allocation completion message/the component carrier activation completion message includes information of component carriers on which the random access failed, or information of component carriers on which the random access succeeded, or both.

Further, the component carrier activation command of adding one or more component carriers is a medium access control element (MAC CE) or a physical downlink control channel command (PDCCH command), wherein configuration of the component carrier activation command comprises the frequency of each of the one or more component carriers, the PCI and/or component carrier identification information, and further comprise any one of dedicated random access resources, an indication of whether a timing advance is consistent with a serving component carrier, and an indication of whether random access needs to performed on the component carrier.

Further, the UE receiving the component carrier activation command in the configuration message of the component carriers comprises: based on whether the component carrier activation command is configured with dedicated random access resources on the one or more component carriers, or based on an indication of whether a timing advance of each of the one or more component carriers in the component carrier activation command is consistent with a corresponding serving component carrier or based on an indication of whether random access needs to be performed on the component carrier, determining whether or not random access needs to be performed on the one or more component carriers.

Further, if said determination result is that the random access needs to be performed on the one or more component carriers, the method further comprising: the UE and the base station determining whether the one or more component carriers are successfully activated according to a result of the random access on the one or more component carriers.

Further, configuration of the handover message of handover to one or more component carriers comprises the frequency of each of the one or more component carriers, PCI and timer information.

Further, configuration of the handover message of handover to one or more component carriers further comprises component carrier identification information and dedicated random access resources.

Further, the UE receiving the handover message in the configuration message of the component carriers comprises: choosing to perform the random access on the one or more component carriers configured with the dedicated random resources based on whether the handover message is configured with dedicated random access resources on the one or more component carriers; or if the handover message is not configured with the dedicated random access resources on the one or more component carriers, the UE randomly choosing to perform the random access on the one or more component carriers.

Further, determining whether handover to the one or more component carriers is successful comprises: before the timer stops, the UE successfully performing the random access on any one of the component carriers or on a component carrier designated in the handover message by the base station, the UE determining the handover to the successful, and sending a handover success message to the base station, wherein the handover success message optionally carries information of component carriers on which the random access fail.

Further, determining whether handover to the one or more component carriers is successful comprises: before the timer stops, the UE failing to perform the random access on any component carrier designated in the handover message, the UE determining a handover fails and performing an RRC connection reestablishment.

In order to achieve the above object, an apparatus for configuring component carriers in carrier aggregation is provided according to the other aspect of the present invention.

An apparatus for configuring component carriers in carrier aggregation according to the present invention comprises: a receiving module, configured to receive a configuration message of the component carriers; a random access module, configured to perform random access on all or part of the component carriers configured upon the receiving module receiving the configuration message; and a determining module, configured to determine, according to a result from the random access module, whether a carrier is successfully configured.

Further, the apparatus further comprises a configuring module configured to configure the component carriers according to the configuration message of the component carriers.

With the present invention, the user equipment UE receives the configuration message of the component carriers, performs the random access on all or part of component carriers of the component carriers, and determines, according to the results of the random access, whether respective component carrier configured in the configuration message is configured successful or not, solving the problem that the RRC processes in the LTE system cannot satisfy the configuration and mobility management of the component carriers in the carrier aggregation in the LTE-A, and further achieving the effects of assuring the good communication performance and mobile performance of UE in the carrier aggregation.

### Brief Description of the Drawings

Drawings, provided for further understanding of the present invention and forming a part of the specification, are used to explain the present invention together with embodiments of the present invention rather than to limit the present invention, wherein
Fig. 1 is a flowchart of a method for configuring component carriers in carrier aggregation of one embodiment of the present invention;
Fig. 2 is a schematic diagram of the coverage of component carriers in carrier aggregation of one embodiment of the present invention;
Fig. 3 is a flowchart of successfully configuring component carriers of Example 1 of Embodiment 1 of embodiments of the present invention;
Fig. 4 is a flowchart of failing in configuring component carriers of Example 1 of Embodiment 1 of embodiments of the present invention;
Fig. 5 is a flowchart of successfully configuring component carriers of Example 2 of Embodiment 1 of embodiments of the present invention;
Fig. 6 is a flowchart of failing in configuring component carriers of Example 2 of Embodiment 1 of embodiments of the present invention;
Fig. 7 is a flowchart of successfully activating component carriers of Embodiment 2 of embodiments of the present invention;
Fig. 8 is a flowchart of failing in activating component carriers of Embodiment 2 of embodiments of the present invention;
Fig. 9 is a schematic diagram of handover component carriers in carrier aggregation of one embodiment of the present invention;
Fig. 10 is a flowchart of successfully handover component carriers in carrier aggregation of Embodiment 3 of embodiments of the present invention;
Fig. 11 is a block diagram of a structure of an apparatus for configuring component carriers in carrier aggregation of one embodiment of the present invention; and
Fig. 12 is a block diagram of a preferred structure of an apparatus for configuring component carriers in carrier aggregation of one embodiment of the present invention.

### Detailed Description of Embodiments

In view of the fact that the RRC processes in the LTE system cannot satisfy the configuration and mobility management of the component carriers in the carrier aggregation in the LTE-A, a solution of configuring component carriers in carrier aggregation is provided in embodiments of the present invention to realize configuration and mobility management of component carriers in carrier aggregation and assure a good communication performance and mobile performance of UE in carrier aggregation, in a precondition of minimizing alterations to the existing RRC connection reconfiguration and handover mechanism.

It should be noted that the embodiments and features therein of the present application can be combined with each other if no conflict is caused. The present invention will be illustrated in detail hereinafter in conjunction with the drawings and embodiments.

A method for configuring component carriers in carrier aggregation is provided according to one embodiment of the present invention.

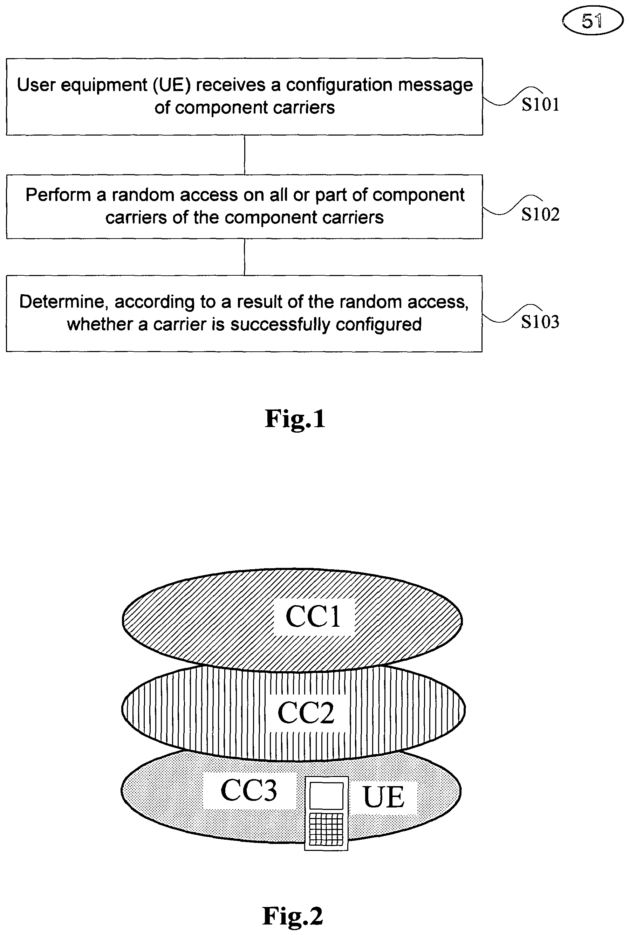

Fig. 1 is a flowchart of a method for configuring component carriers in carrier aggregation of one embodiment of the present invention. As shown in Fig. 1, the method comprises Step S101 to Step S103 as follows.

Step S101, a user equipment (UE) receives a configuration message of the component carriers.

In the above, the configuration message is a component carrier allocation message of adding one or more component carriers, a component carrier activation message of adding one or more component carriers, a component carrier activation command of adding one or more component carriers and a handover message of handover to one or more component carriers, each message being sent from a base station to the UE.

In the above, each of the component carrier allocation message of adding one or more component carriers and the component carrier activation message of adding one or more component carriers is a radio resource control (RRC) dedicated signaling, wherein configuration of each of the component carrier allocation message and the component carrier activation message includes the frequency, the physical cell identity ("PCI") and/or component carrier identification information, and/or timer information of each of the one or more component carriers, and further comprises any one of dedicated random access resources, an indication of whether a timing advance is consistent with a serving component carrier, and an indication of whether random access needs to performed on the component carrier.

In the above, the component carrier activation command of adding one or more component carriers is a medium access control element (MAC CE) or a physical downlink control command (PDCCH command), wherein configuration of the component carrier activation command comprises the frequency of each of the one or more component carriers, the PCI and/or component carrier identification information, and further comprise any one of dedicated random access resources, an indication of whether a timing advance is consistent with a serving component carrier, and an indication of whether random access needs to performed on the component carrier.

In the above, the handover message of handover to one or more component carriers is configured with the frequency of each of one or more component carriers, PCI, and/or component carrier identification information, and/or dedicated random access resources and timer information.

Step S102, the UE performs the random access on all or part of component carriers of the component carriers.

Specifically, the UE receives the component carrier allocation message and determines, based on whether the dedicated random access resources are configured on one or more component carriers in the component carrier allocation message, or according to an indication of whether the timing advance of one or more component carriers is the same as that of the serving component carrier or an indication of whether the random access needs to be performed on this component carrier configured in the component carrier allocation message, whether the random access needs to be performed on one or more component carriers.

Specifically, the UE receives the component carrier activation command/component carrier activation message, and determines, based on whether the component carrier activation command/component carrier activation message is configured with the dedicated random access resources on one or more component carriers, or according to an indication of whether the timing advance of one or more component carriers is the same as that of the serving component carrier or an indication of whether the random access needs to be performed on this component carrier configured in the component carrier activation command/component carrier activation message, whether the random access needs to be performed on one or more component carriers.

Specifically, the UE receives the handover message and chooses, based on whether the handover message is configured with the dedicated random access resources on one or more component carriers, to perform the random access on one or more component carriers.

Step S103, the UE determines whether a component carrier is successfully configured according to a result of the random access.

Specifically, upon receiving the component carrier allocation message, if the UE needs, according to a determination of Step S102, to perform the random access on one or more component carriers, the UE sends a component carrier allocation completion message/component carrier activation completion message to the base station according to the results of the random access on one or more component carriers before the timer stops, wherein the component carrier allocation completion message/component carrier activation completion message carries information of component carriers on which the random access is failed, or carriers information of component carriers on which the random access is successful, or carries information of component carriers on which the random access is successful and information of component carriers on which the random access is failed.

Specifically, upon receiving the component carrier activation command, if the UE needs, according to the determination of Step S102, to perform the random access on one or more component carriers, the UE and the base station determine, according to the result of the random access on one or more component carriers, whether one or more component carriers are successfully activated.

Specifically, after the handover message is received and before the timer stops, the UE successfully performs the random access on any one component carrier, the UE determines the handover to be successful and sends a handover completion message to the base station, wherein the handover completion message optionally carries information of component carriers on which the random access is failed. Before the timer stops, the UE fails to successfully perform the random access on any one component carrier configured in the handover message, and the UE determines the handover to be failed and performs an RRC connection reestablishment.

Processes of accomplishing the embodiments of the present invention will be described in detail hereinafter in conjunction with examples.

### Embodiment 1

User equipment UE is LTE-A UE having a carrier aggregation capability. As shown in Fig. 2, after the UE establishes an RRC connection on a component carrier 3 (downlink frequency f3, uplink frequency f3'), shorted as CC3 (DL f3, UL f3'), due to service requirements, a base station needs to add two component carriers, *i.e.,* a component carrier 1 CC1 (DL f1, UL f1') and a component carrier 2 CC2 (DL f2, UL f2'), for the UE, and the CC1, CC2 and CC3 have different TAs. According to the service requirements, the base station can add the component carriers CC1 and CC2 at twice in sequence, and also can add simultaneously the component carriers CC1 and CC2. Processes of adding the component carriers CC1 and CC2 will be illustrated in detail by giving Example 1 and Example 2.

### Example 1

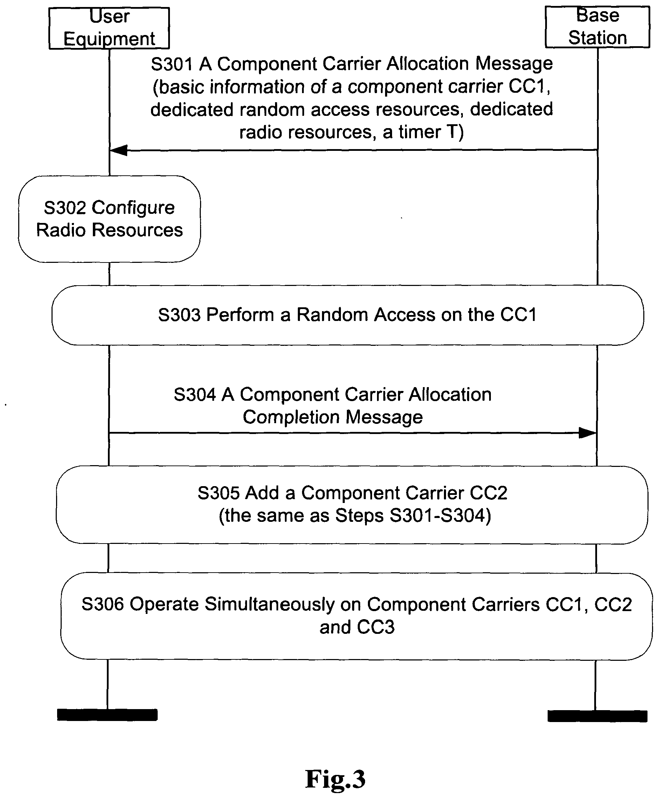

Fig. 3 is a flowchart of successfully configuring component carriers of Example 1 of Embodiment 1 of embodiments of the present invention. As shown in Fig. 3, a base station adds component carriers CC1 and CC2 at twice in sequence, comprising Step S301 to Step S306 as follows.

Step S301, the base station configures, on a component carrier CC3, the component carrier CC1 for UE through a dedicated RRC signaling, wherein a specific configuration message can be a newly added RRC message such as a component carrier allocation message as shown in Fig. 2, and an RRC message such as an RRC connection reconfiguration message already existing in an LTE also can be reused. For the sake of convenient description, in the present embodiment the component carrier allocation message is always used to represent the newly added RRC message or the reused LTE RRC message. This message is configured with basic information of the component carrier that needs to be added, comprising information such as uplink and downlink frequency, a physical cell identity ("PCI" for short) and bandwidth, and optionally, this component carrier also can be allocated with a component carrier identifier 1; dedicated random access resources on the component carrier CC1 (*i.e.,* a physical random access preamble or physical random access channel resources allocated to the UE for performing a noncompetitive random access on the UL f1'); dedicated radio resources on the component carrier CC1 (*i.e*., allocating to the UE a physical downlink shared channel, a physical uplink shared channel, a physical uplink control channel and other resources, which will not be listed one by one herein, for data transceiver on the CC1); and a timer T.

Step S302, the UE, upon receiving the component carrier allocation message, starts the timer T, and configures, according to configuration information carried in this message, the dedicated radio resources on the component carrier CC1.

Step S303, the UE determines, according to whether the received component carrier allocation message is configured with the dedicated random access resources on the component carrier, whether the random access needs to be initiated on the component carrier. In the present embodiment, as the component carrier allocation message is configured with the dedicated random access resources on the component carrier CC1, the UE initiates, according to the configured dedicated random access resources, the noncompetitive random access on the component carrier CC1 (UL f1').

Step S304, before the timer T stops, the UE successfully performs the random access on the component carrier CC1 and sends on the component carrier CC1 or CC3 a component carrier allocation completion message to the base station.

It should be noted that the UE initiates the noncompetitive random access on the UL f1', *i.e.,* the UE sends the random access preamble on the UL f1', if the UE successfully receives, on the UL f1, a response to the random access preamble (random access response) sent on the UL f1', the random access is considered to be successful.

In the random access response, uplink scheduling resources (UL grant) on the UL f1' can be allocated to the UE for sending uplink data, and the UE can send on the allocated uplink resources, *i.e.,* on the CC1, the component carrier allocation completion message to the base station.

If in the random access response, the UL grant on the UL f1' is not allocated to the UE for sending the uplink data, the UE can send on the component carrier CC1 or CC3 an uplink scheduling request (scheduling request, "SR" for short) to the base station. The base station, upon receiving the SR from the UE, can allocate uplink resources to the UE for sending the uplink data and send on the allocated uplink resources the component carrier allocation completion message to the base station.

Step S305, upon receiving the component carrier CC1 allocation completion message, the base station continues to configure the component carrier CC2 to the UE, and a configuring process thereof is the same as Step 2-1 to Step 2-4. At this time, the UE has operated simultaneously on the component carriers CC1 and CC3, thus, a component carrier allocation message of configuring the component carrier CC2 can be sent on the component carrier CC1 or CC3 to the UE. Correspondingly, after the configuration is successful, a component carrier allocation completion message also can be sent on the CC1, CC2 or CC3.

Step S306, after the component carriers CC1 and CC2 are successfully configured, the UE performs a data transmission simultaneously on the CC1, CC2 and CC3.

It should be noted that if the UE has acquired common random access resources (*i.e.,* a common random access preamble group and common physical random access channel resources for the UE to perform a competitive random access on the UL f1') on the component carriers CC1 and CC2 through a system message or an RRC dedicated signaling before receiving the component carrier allocation message in Step S301, when the component carrier CC1 is added in Step S301, according to a situation of using the random access resources, the base station also may not necessarily allocate to the UE the dedicated random access resources on the CC1, but only indicates that TA on the CC1 is different, or indicates that the UE needs to perform the random access on the CC1. The UE, upon receiving the component carrier allocation message, initiates the competitive random access on the CC1 by using the common random access resources.

It should be additionally noted that in the present embodiment, if TA on a certain component carrier that needs to be newly added is the same as a TA on a certain component carrier already in operation (*i.e.,* a serving component carrier) of the UE, when this newly added component carrier is configured, the base station does not need to configure dedicated random access resources for this component carrier, and optionally, it can be indicated that the TA on this component carrier is the same as the TA on a certain serving component carrier already in operation of the UE, or that the UE does not need to perform the random access on this component carrier. The UE, upon receiving the component carrier allocation message, configures the dedicated radio resources according to the configuration information, does not need to perform the random access on the newly added component carrier but can directly perform data transceiver on this component carrier.

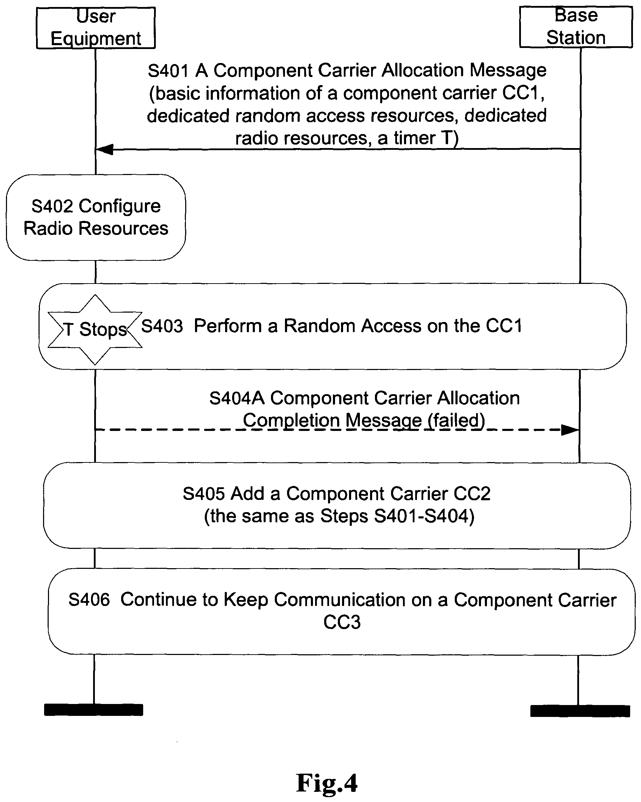

Fig. 4 is a flowchart of failing in configuring component carriers of Example 1 of Embodiment 1 of embodiments of the present invention, comprising following Step S401 to Step S406 as shown in Fig. 4.

Step S401 to Step S403 are the same as Step S301 to Step S303, respectively.

Step S404: when the timer T stops, the UE has not completed the random access on the component carrier CC1 or the UE has failed to perform the random access on the component carrier CC1, the UE deletes a dedicated radio resource configuration on the component carrier CC1 configured in Step S402, and meanwhile, sends on the component carrier CC3 a component carrier allocation completion message to the base station. This message indicates that the component carrier CC1 has failed to be configured, and a specific indicating manner can be carrying frequency information of the component carrier CC1 or component carrier identification information.

It should be noted that, when the timer T stops, the UE has not completed the random access on the component carrier CC1 or the UE has failed in the random access on the CC1, if the UE at this time has no uplink resource on the CC3 for sending uplink data, the UE sends on the CC3 an SR to the base station. The base station, upon receiving the SR from the UE, can allocate uplink resources to the UE for sending the uplink data, and the UE sends on the allocated uplink resources the component carrier allocation completion message to the base station.

Step S405 is the same as Step S401 to Step S404.

Step S406, the component carriers CC1 and CC2 have failed to be configured, and the UE continues to keep communication on the component carrier CC3 and perform the data transmission.

It should be noted that in the present example the component carriers have failed to be configured, in step S404 the UE also may not send the component carrier allocation completion message to the base station, and the base station determines, if receiving no component carrier allocation completion message from the UE for a period of time, that the component carriers have failed to be configured, and the base station does not schedule this UE on the component carriers CC1 and CC2.

### Example 2

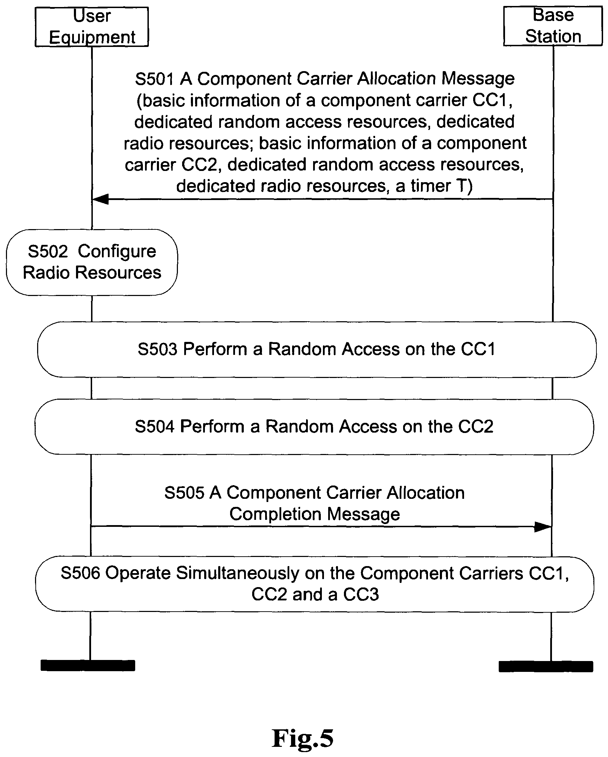

Fig. 5 is a flowchart of successfully configuring component carriers of Example 2 of Embodiment 1 of embodiments of the present invention. As shown in Fig. 5, component carriers CC1 and CC2 are simultaneously added, comprising Step S501 to Step S506 as follows.

Step S501, a base station configures, on a component carrier CC3, the component carriers CC1 and CC2 for UE through a component carrier allocation message. This message is configured with basic information of component carriers that need to be added, comprising information such as uplink and downlink frequency of the component carrier CC1, PCI and bandwidth, and optionally, this component carrier also can be allocated with a component carrier identifier 1; dedicated random access resources on the component carrier CC1; and dedicated radio resources on the component carrier CC1. In addition, information such as uplink and downlink frequency of the component carrier CC2, PCI and bandwidth is also comprised, and optionally, this component carrier also can be allocated with a component carrier identifier 2; dedicated random access resources on the component carrier CC2; dedicated radio resources on the component carrier CC2, and a timer T.

Step S502, the UE, upon receiving the component carrier allocation message, starts the timer T, and configures, according to configuration information carried in this message, the dedicated radio resources on the component carriers CC1 and CC2.

Step S503-Step S504, the UE determines, according to whether the received component carrier allocation message is configured with the dedicated random access resources on a corresponding component carrier, whether the random access needs to be initiated on the corresponding component carrier. In the present embodiment, as the component carrier allocation message is configured with the dedicated random access resources on the component carriers CC1 and CC2, the UE initiates, according to the configured dedicated random access resources, a noncompetitive random access on the component carriers CC1 (UL f1') and CC2 (UL f2').

It should be noted that according to different UE capabilities and base station capabilities, the UE can initiate the random access on the component carriers CC1 and CC2 in sequence. If the UE and base station capabilities allow, the UE also can initiate the random access simultaneously on the component carriers CC1 and CC2. In the present embodiment, the UE initiates the random access on the component carriers CC1 and CC2 in sequence.

Step S505, before the timer T stops, the UE is successful in the random access on both component carriers CC1 and CC2, and the UE sends on the component carrier CC1 or CC2 or CC3 a component carrier allocation completion message to the base station.

In the present embodiment, the UE finally is successful in the random access on the CC2, and the UE can send on the CC2 the component carrier allocation completion message to the base station according to uplink scheduling resources on the UL f2' allocated in a random access response to the UE.

If in the random access response on the CC2, the uplink scheduling resources on the UL f2' is not allocated to the UE, the UE can send on the component carrier CC1 or CC2 or CC3 an SR to the base station. The base station, upon receiving the SR from the UE, can allocate uplink resources to the UE for sending uplink data and send on the allocated uplink resources the component carrier allocation completion message to the base station.

In the present example, the UE also can send on the component carriers CC1 and CC2 the component carrier allocation completion message to the base station, *i.e.,* after the UE is successful in the random access on the component carrier CC1, the UE sends on the CC1, according to the uplink scheduling resources on the UL f1' allocated in the random access response on the CC1 to the UE, the component carrier allocation completion message to the base station. After the UE is successful in the random access on the component carrier CC2, the UE sends on the CC2, according to the uplink scheduling resources on the UL f2' allocated in the random access response on the CC2 to the UE, the component carrier allocation completion message to the base station. The base station, upon receiving the component carrier allocation completion message on a certain CC, merely determines that a component carrier configuration is successful on corresponding component carrier.

Step S506, after the component carriers CC1 and CC2 are successfully configured, the UE performs a data transmission simultaneously on the component carriers CC1, CC2 and CC3.

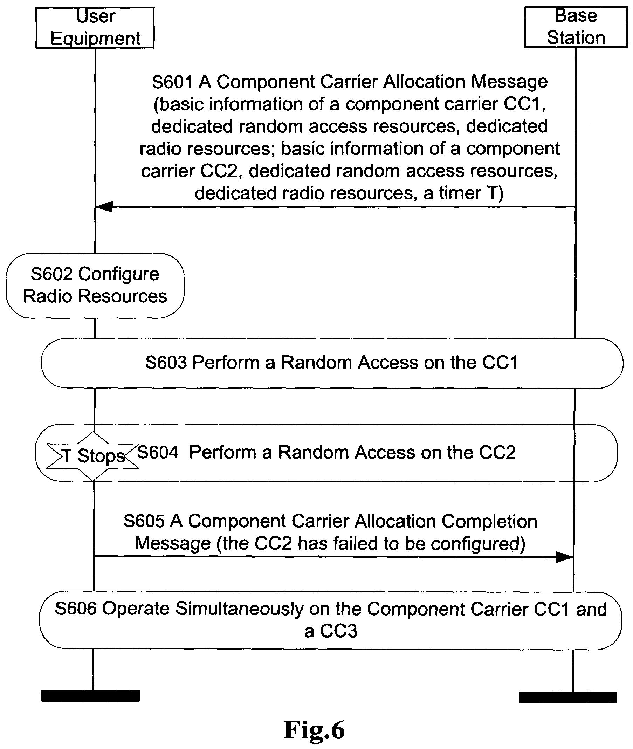

Fig. 6 is a flowchart of failing in configuring component carriers of Example 2 of Embodiment 1 of embodiments of the present invention, comprising following Step S601 to Step S606 as shown in Fig. 6.

Step S601 to Step S604 are the same as Step S501 to Step S504.

Step S605, before the timer T stops, UE is successful in the random access on the component carrier CC1, but fails in the random access on the component carrier CC2 or has not completed the random access on the component carrier CC2, the UE deletes a dedicated radio resource configuration on the component carrier CC2 configured in Step 5-2, and meanwhile sends on the component carrier CC1 or CC3 a component carrier configuration completion message to the base station. This message indicates that the component carrier CC2 has failed to be configured (or this message indicates that the component carrier CC1 is successfully configured, or this message indicates that the component carrier CC1 is successfully configured and the component carrier CC2 has failed to be configured), and a specific indicating manner can be carrying frequency information of corresponding component carriers or component carrier identification information, and/or can be an indication of success or failure.

In the present embodiment, the UE firstly performs the random access on the CC1 and succeeds, and then the UE performs the random access on the CC2, but when the timer T stops, the CC2 has not completed the random access on the CC2 or the UE has failed in the random access on the CC2, the UE sends on the component carrier CC1 or CC3 an SR to the base station, the base station, upon receiving the SR from the UE, can allocate uplink resources to the UE for sending uplink data, and the UE sends on the allocated uplink resources a component carrier allocation completion message to the base station.

It should be additionally noted that if the UE firstly performs the random access on the CC2 but fails, and then the UE performs the random access on the CC1, and is successful in the random access when the timer T stops, then the UE can send on the CC1, according to uplink scheduling resources on the UL f1' allocated in a random access response on the CC1 to the UE, the component carrier allocation completion message to the base station. If in the random access response on the CC1, the uplink scheduling resources on the UL f1' are not allocated to the UE, the UE can send on the component carrier CC1 or CC3 the SR to the base station, and the base station, upon receiving the SR from the UE, can allocate the uplink resources to the UE for sending uplink data, and the UE sends on the allocated uplink resources the component carrier allocation completion message to the base station.

In the present example, the UE can also send merely on the component carrier CC1 the component carrier allocation completion message to the base station, *i.e.,* after the UE is successful in the random access on the component carrier CC1, the UE sends on the CC1, according to uplink scheduling resources on the UL f1' allocated in random access responses on the CC1 to the UE, the component carrier allocation completion message to the base station,. This message does not carry a result of the random access on the CC2. Upon receiving, the base station merely determines that the component carrier CC1 is successfully configured. Before the timer T stops, the UE has not completed the random access on the component carrier CC2 or the random access has failed, the UE returns no information to the base station. The base station, if receiving no component carrier allocation completion message on the CC2 for a period of time, determines that the component carrier CC2 has failed to be configured.

Step S606, after the component carrier CC1 is successfully configured and the CC2 has failed to be configured, the UE performs the data transmission simultaneously on the component carriers CC1 and CC3.

### Embodiment 2

User equipment UE is LTA-A UE having a carrier aggregation capability, as shown in Fig. 2, there are, in a location where current UE is located, in total three component carriers CC1 (DL f1, UL f1'), CC2 (DL f2, UL f2') and CC3 (DL f3, UL f3') that can perform carrier aggregation, and TAs on the component carriers CC1, CC2 and CC3 are different from each other. The UE establishes an RRC connection on the component carrier CC3, and subsequently due to service requirements, the base station needs to add two component carriers CC1 and CC2 for the UE.

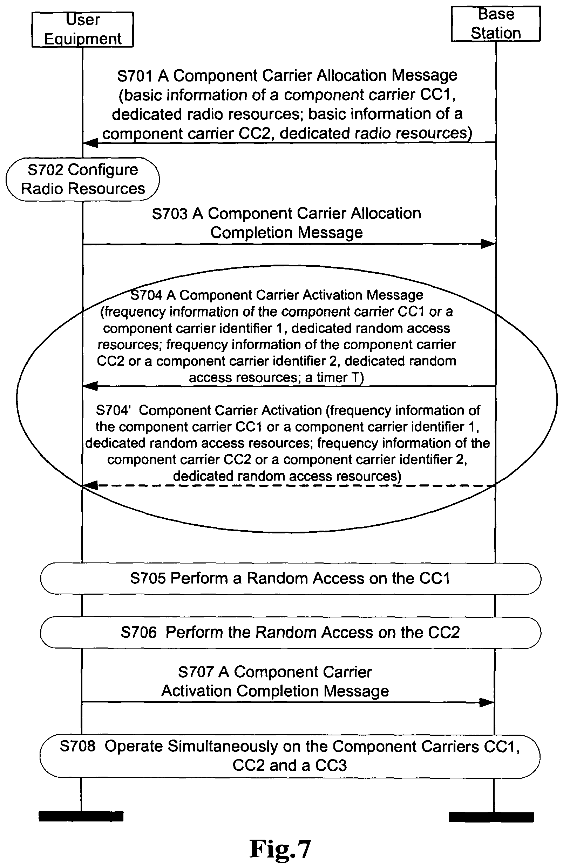

Fig. 7 is a flowchart of successfully activating component carriers of Example 2 of embodiments of the present invention, comprising following Steps S701 to Step S708 as shown in Fig. 7.

Step S701, a base station configures, on a component carrier CC3, component carriers CC1 and CC2 for UE through a component carrier allocation message. This message is configured with basic information of component carriers that need to be added, comprising information such as uplink and downlink frequency of the component carrier CC1, PCI and bandwidth; and optionally, this component carrier also can be allocated with a component carrier identifier 1 and dedicated radio resources on the component carrier CC1. In addition, information such as uplink and downlink frequency of the component carrier CC2, PCI and bandwidth is also comprised, and optionally, this component carrier also can be allocated with a component carrier identifier 2 and dedicated radio resources on the component carrier CC2.

Step S702, the UE, upon receiving the component carrier allocation message, stores but not configure configuration information on the component carriers CC1 and CC2 carried in the message.

Step S703, the UE sends on the component carrier CC3 a component carrier allocation completion message to the base station.

Step S701 to Step S703, the base station allocates the dedicated radio resources on the component carriers CC1 and CC2 to the UE, the UE receives and stores the configuration information, and the base station and the UE do not schedule or transceiver data on the CC1 and CC2, *i.e.,* the component carrier configuration process in the present embodiment is merely a resource announcement process prepared for subsequently activating of CC1 and/or CC2.

Step S704 or Step S704', due to service requirements, the UE needs to activate the component carriers CC1 and CC2. The base station activates the component carriers CC1 and CC2 through an RRC dedicated signaling, or a medium access control element ("MAC CE" for short), or a physical downlink control channel ("PDCCH" for short) command, wherein the RRC dedicated signaling can reuse an RRC message such as an RRC reconfiguration message already existing in LTE, or a new RRC dedicated signaling is introduced. For the sake of convenient description, in the present embodiment the component carrier activation message is always used to represent the newly added RRC message or the reused LTE RRC message. The component carrier activation message or the MAC CE or PDCCH command indicates the component carriers that need to be activated, for instance, frequency of the component carriers or component carrier identifiers are indicated, and meanwhile, the dedicated random access resources on the component carriers are configured. Apart from the information above, a timer T is also configured in the component carrier activation message.

Step S705 to Step S706, the UE configures the dedicated radio resources on the component carriers CC1 and CC2 according to the configuration information stored in Step S701 to Step S703, and determines, based on whether the received component carrier activation message or the MAC CE or PDCCH command is configured with the dedicated random access resources on a corresponding component carrier, whether a random access needs to be initiated on the corresponding component carrier. In the present embodiment, as the component carrier activation message or the MAC CE or PDCCH command is configured with the dedicated random access resources on the component carriers CC1 and CC2, the UE initiates a noncompetitive random access on the component carriers CC1 and CC2 according to the configured dedicated random access resources.

It should be noted that according to different UE capabilities and base station capabilities, the UE can initiate the random access on the component carriers CC1 and CC2 in sequence. If the UE and base station capabilities allow, the UE also can initiate the random access simultaneously on the component carriers CC1 and CC2. In the present embodiment, the UE initiates the random access on the component carriers CC1 and CC2 in sequence.

Besides, if the base station informs the UE of activating the component carriers CC1 and CC2 through the component carrier activation message in Step 6-4, the UE also needs to start the timer T.

Step S707, if the base station informs the UE of activating the component carriers CC1 and CC2 through the component carrier activation message in Step S704, before the timer T stops, the UE is successful in the random access on both component carriers CC1 and CC2, then the UE sends on the component carrier CC1 or CC2 or CC3 a component carrier activation completion message to the base station. A specific sending process is the same as the descriptions of Step S505 in Example 2 of Embodiment 1.

If the base station activates the component carriers CC1 and CC2 through the MAC CE or PDCCH command in Step S704', the base station can determine, according to an HARQ (Hybrid Automatic Repeat Request) acknowledgement of the UE to the MAC CE for activating the component carriers or based on whether there is an uplink data transmission on the component carriers CC1 and CC2, whether the random access is successful.

Step S708, after the component carriers CC1 and CC2 are successfully activated, the UE performs a data transmission simultaneously on the component carriers CC1, CC2 and CC3.

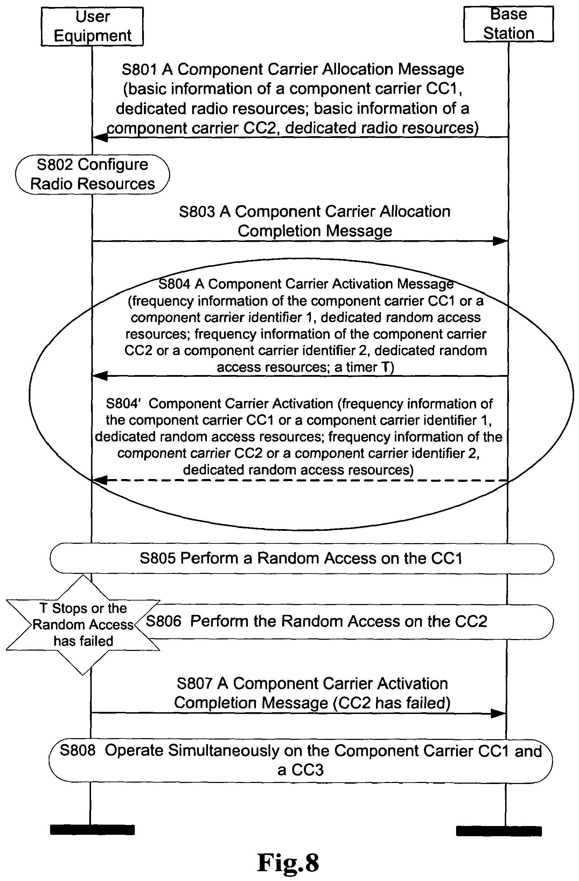

Fig. 8 is a flowchart of failing in activating component carriers of Embodiment 2 of embodiments of the present invention, comprising following Step S801 to Step S808 as shown in Fig. 8.

Step S801 to Step S806 are the same as Step S701 to Step S706, respectively.

Step S807, if the base station informs the UE of activating the component carriers CC1 and CC2 through the component carrier activation message in Step S804, before the timer T stops, UE is successful in the random access on the component carrier CC1 but has failed in the random access on the CC2 or has not completed the random access on the CC2, then the UE cancels configuration of dedicated radio resources on the component carrier CC2 (but continues to store dedicated radio resource configuration information on the CC2), and meanwhile, the UE sends on the component carrier CC1 or CC3 a component carrier activation completion message to the base station. This message indicates that the component carrier CC2 has failed to be activated (or this message indicates that the component carrier CC1 is successfully configured, or this message indicates that the component carrier CC1 is successfully configured and the component carrier CC2 has failed to be activated). A specific sending process is the same as that of Step S605 of Example 2 of Embodiment 1.

If the base station activates the component carriers CC1 and CC2 through the MAC CE or PDCCH command in step S804', the base station can determine, according to an HARQ (Hybrid Automatic Repeat Request) acknowledgement of the UE to the MAC CE for activating the component carriers or based on whether there is an uplink data transmission on the component carriers CC1 and CC2, whether the random access is successful.

Step S808, after the component carrier CC1 is successfully configured and CC2 has failed to be configured, the UE performs a data transmission simultaneously on the component carriers CC1 and CC3.

It should be noted that in the present embodiment, according to service requirements, the base station can add and activate the component carriers CC1 and CC2 separately and sequentially.

It also should be noted that if the UE has acquired common random access resources on the component carriers CC1 and CC2 through a system message or an RRC dedicated signaling before receiving the component carrier activation message or the component carrier activation command in step S704 or Step S704', in Step S704 or Step S704' the UE, when activating the component carriers CC1 and CC2, according to a situation of using the random access resources, also may not necessarily allocate the dedicated random access resources on the CC1 and CC2 to the UE, but merely indicates that TAs on the CC1 and CC2 are different, or indicates that the UE needs to perform the random access on the CC1 and CC2. The UE, upon receiving the component carrier configuration message, initiates a competitive random access on the CC1 and CC2 by using the common random access resources.

With the methods for configuring the component carriers of Embodiment 1 and Embodiment 2 of the present invention, and reusing the RRC connection reconfiguration mechanism of the existing LTE, the configuration management of adding component carriers in carrier aggregation can be realized in a precondition of minimizing alterations to the existing RRC connection reconfiguration mechanism, and especially when a component carrier that needs to be added has a TA different from that of any one serving component carrier currently in operation of the UE, with the method of the present invention, an uplink synchronization on the added component carrier can be realized, so that configuration management of component carriers having different TAs is accomplished, and a broader bandwidth and a higher peak rate are provided to the user equipment.

### Embodiment 3

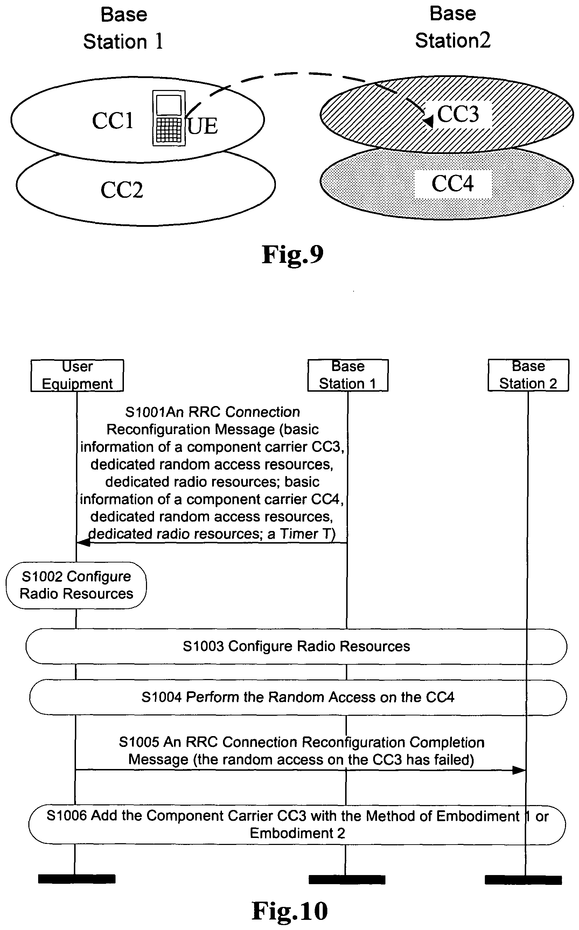

User equipment UE is LTE-A UE having a carrier aggregation capability. As shown in Fig. 9, the UE currently is operating on component carriers CC1 (DL f1, UL f1') and CC2 (DL f2, UL f2') which belongs to a base station 1, and the UE detects that signal intensities of component carriers CC3 (DL f3, UL f3') and CC4 (DL f4, UL f4') which belongs to a base station 2 meet a measurement report condition and reports measurement results to the base station 1, wherein TAs on the component carriers CC3 and CC4 are different from each other, and the base station 1 determines, according to a radio resource management algorithm, to handover the UE to the component carriers CC3 and CC4.

Fig. 10 is a flowchart of successfully handover component carriers in carrier aggregation of Embodiment 3 of embodiments of the present invention, comprising following Step S1001 to Step S1006 as shown in Fig. 10.

Step S1001, the base station 1 sends a handover message (comprised in an RRC connection reconfiguration message) to the UE. Target component carrier information is indicated in this message and comprises basic information of a target component carrier, such as information of uplink and downlink frequency, PCI and bandwidth, and optionally, a component carrier identifier, dedicated random access resources and dedicated radio resources on the target component carriers CC3 and CC4, and a timer T also can be allocated.

Step S1002, the UE, upon receiving the RRC connection reconfiguration message, starts the timer T and configures the dedicated radio resources on the CC3 and CC4 according to a configuration message.

Step S1003 to Step S1004, the UE initiates a random access on the component carrier CC3, but has failed in the random access on the CC3, thus the UE continues to initiate the random access on the CC4.

It should be noted that if the UE and base station capabilities allow, the UE also can initiate the random access simultaneously on the component carriers CC3 and CC4. In the present embodiment, the UE initiates the random access on the component carriers CC3 and CC4 in sequence.

Step S1005, before the timer T stops, the UE is successful in the random access on the component carrier CC4, the UE sends on the component carrier CC4 a handover completion message (comprised in an RRC connection reconfiguration completion message) to the base station 2. This message also can indicate that the random access on the component carrier CC3 has failed. A specific indication can carry the frequency information of the component carrier CC3 or component carrier identification information.

In other words, before the timer T stops, the handover is considered to be successful as long as the UE is successful in the random access on any one target component carrier.

Step S 1006, the base station 2, upon receiving on the component carrier CC4 the RRC connection reconfiguration completion message, determines the handover to be successful and the UE to have failed in the random access on the component carrier CC3, and the base station can continue to configure or activate the component carrier CC3 with the method of Embodiment 1 or Embodiment 2.

It should be noted that in the present embodiment, if the UE is not successful in the random access on any one of the CC3 and CC4 before the timer T stops, the UE considers that the handover is failed, deletes configuration on the CC3 and CC4, restores configuration on the component carriers CC1 and CC2, and triggers an RRC connection reestablishment. The RRC connection reestablishment process is the prior art and unnecessary details will not be given herein.

It should be additionally noted that in the present embodiment, the base station, when sending the RRC connection reconfiguration message to the UE to indicate to handover the UE, also can only choose to configure dedicated random access resources on one component carrier such as the component carrier CC3, while simultaneously configure dedicated radio resources on the component carriers CC3 and CC4. The UE, upon receiving this message, starts the timer T, stores and configures the dedicated radio resources on the CC3, and stores the dedicated radio resources on the CC4, and then initiates the random access on the CC3. If the UE is successful in the random access on the component carrier CC3 before the timer T stops, the handover is considered to be successful; likewise, after the handover is successful, the base station 2 can activate the component carrier CC4 with the method of Embodiment 2. If, before the timer T stops, the UE has failed in the random access on the component carrier CC3 or the UE has not completed the random access on the component carrier CC3, the UE considers that the handover has failed, deletes configurations on the CC3 and CC4, restores configurations on the component carriers CC1 and CC2, and triggers the RRC connection reestablishment.

It should be additionally noted that in the present embodiment, the base station also may not indicate, in the RRC connection reconfiguration message sent to the UE, dedicated random access resources on any component carrier, but only allocates to the UE the common random access resources on part (for instance, only the common random access resources on the CC3) or all (for instance, comprising the common random access resources on CC3 and CC4) of the component carriers. The UE, upon receiving this message, starts the timer T, and configures, according to the configuration message, the dedicated radio resources on the CC3 and CC4, and then the UE chooses to perform a competitive random access on a certain component carrier (if the UE and base station capabilities allow, the UE also can initiate the random access simultaneously on the component carriers CC3 and CC4). Similarly, before the timer T stops, as long as the UE is successful in the random access on any one CC, the random access is determined to be successful; and if the UE is not successful in the random access on any one of the CC3 and the CC4 before the timer T stops, the UE considers that the handover has failed, deletes the configurations on CC3 and CC4, restores the configurations on the component carriers CC1 and CC2, and triggers the RRC connection reestablishment.

With the method of mobility management of Embodiment 3 of the present invention, in a precondition of minimizing alterations to the existing handover process, the handover to multiple component carriers in the carrier aggregation can be realized, and especially when the target component carriers for handover have TAs different from each other, with the method of the present invention, the handover is considered to be successful as long as the UE is successful in the random access on any one target component carrier or the UE is successful in the random access on a certain target component carrier designated by the base station, so that the mobility management when the target component carriers have different TAs in the carrier aggregation is realized.

It should be noted that steps shown in the flowcharts of the figures can be implemented with a computer system with a set of instructions executable by computer, and though the logical orders are shown in the flowcharts, the steps shown or described can be carried out in orders different from that herein in some cases.

An apparatus for configuring component carriers in carrier aggregation is provided according to one embodiment of the present invention.

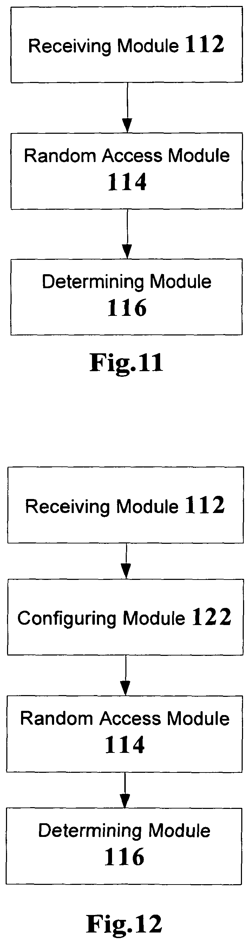

Fig. 11 is a block diagram of a structure of an apparatus for configuring component carriers in carrier aggregation of one embodiment of the present invention. As shown in Fig. 11, the apparatus comprises: a receiving module 112, a random access module 114 and a determining module 116. The structures above will be described in detail hereinafter.

The receiving module 112 is configured to receive a configuration message of component carriers.

The random access module 114, connected to the receiving module 112, is configured to perform a random access on all or part of component carrier of the component carriers configured upon the receiving module 112 receiving the configuration message.

The determining module 116, connected to the random access module 14, is configured to determine, according to a result of the random access module 114, whether a carrier is successfully configured.

Fig. 12 is a block diagram of a preferred structure of an apparatus for configuring component carriers in carrier aggregation of one embodiment of the present invention. As shown in Fig. 12, the apparatus comprises a configuring module 122 which will be described in detail hereinafter.

The configuring module 122, connected with the receiving module 112 and the random access module 114, is configured to configure component carriers according to the configuration message of the component carriers received by the receiving module 112.

It should be noted that the apparatus for configuring the component carriers in carrier aggregation described in the apparatus embodiments are corresponding to the method embodiments above, and specific realizing processes thereof have been set forth in the method embodiments in detail, and unnecessary details will not be given herein.

With the present invention, in a precondition of minimizing alterations to the exiting RRC connection reconfiguration and handover mechanism, the configuration and mobility management of component carriers in carrier aggregation are realized, and a good communication performance and mobile performance of the UE in the carrier aggregation are assured.

Obviously, those skilled in the art shall understand that individual modules and individual steps of the present invention can be implemented with general computing apparatuses, they may be integrated in a single computing apparatus or distributed in network formed by a plurality of computing apparatuses, optionally, they may be implemented by using program codes executable by computing apparatuses, thus they may be stored in memory apparatuses for execution by the computing apparatuses, or implemented by making them into integrated circuit module respectively, or by making several means or steps in to a single IC. Thus, the present invention is not limited to any particular combination of hardware and software.

The above mentioned is merely the preferred embodiments of the present invention but not to limit the present invention. Various alterations and changes to the present invention are apparent to the person skilled in the art. Any modifications, equivalent substitutions, improvements etc. within the principle of the present invention should be concluded in the scope protected by the present invention.

## Claims

1. A method for configuring component carriers in carrier aggregation, comprising:
user equipment (UE) receiving a configuration message of the component carriers (S101);
performing a random access on all or part of the component carriers (S 102), and
determining, according to a result of the random access, whether the component carriers are successfully configured (S103);
wherein the configuration message comprises one of: a component carrier allocation message of adding one or more component carriers, a component carrier activation message of adding one or more component carriers and a component carrier activation command of adding one or more component carriers, each message being sent from a base station to the UE;
**characterized by** the UE receiving the component carrier allocation message/the component carrier activation message in the configuration message of the component carriers further comprises: based on whether the component carrier allocation message/the component carrier activation message is configured with dedicated random access resources on the one or more component carriers, or based on an indication of whether a timing advance of each of the one or more component carriers in the component carrier allocation message/the component carrier activation message is consistent with a corresponding serving component carrier, determining whether or not random access needs to be performed on the one or more component carriers;
wherein the UE receiving the component carrier activation command in the configuration message of the component carriers comprises: based on whether the component carrier activation command is configured with dedicated random access resources on the one or more component carriers, or based on an indication of whether a timing advance of each of the one or more component carriers in the component carrier activation command is consistent with a corresponding serving component,
determining whether or not random access needs to be performed on the one or more component carriers.

2. The method according to Claim 1, **characterized in that** each of the component carrier allocation message of adding one or more component carriers and the component carrier activation message of adding one or more component carriers is a radio resource control (RRC) dedicated signaling, wherein
configuration of each of the component carrier allocation message and the component carrier activation message includes a frequency, a physical cell identity (PCI) and/or component carrier identification information, and/or timer information of each of the one or more component carriers, and further comprises any one of
dedicated random access resources, an indication of whether a timing advance is consistent with a serving component carrier, and an indication of whether random access needs to performed on the component carrier.

3. The method according to Claim 1, **characterized in that**, if said determination result is that random access needs to be performed on the one or more component carriers, the method further comprises:
the UE sends a component carrier allocation completion message/a component carrier activation completion message to the base station according to a random access result on each of the one or more component carriers before a corresponding timer stops, wherein the component carrier allocation completion message/the component carrier activation completion message includes information of component carriers on which the random access failed, or information of component carriers on which the random access succeeded, or both.

4. The method according to Claim 1, **characterized in that** the component carrier activation command of adding one or more component carriers is a medium access control element (MAC CE) or a physical downlink control channel command (PDCCH command), wherein
configuration of the component carrier activation command comprises a frequency of each of the one or more component carriers, a PCI and/or component carrier identification information, and further comprise any one of
dedicated random access resources, an indication of whether a timing advance is consistent with a serving component carrier, and an indication of whether random access needs to performed on the component carrier.

5. The method according to Claim 1, **characterized in that**, if said determination result is that the random access needs to be performed on the one or more component carriers, the method further comprising:
the UE and the base station determining whether the one or more component carriers are successfully activated according to a result of the random access on the one or more component carriers.

6. An apparatus for configuring component carriers in carrier aggregation, comprising:
a receiving module (112), configured to receive a configuration message of the component carriers;
a random access module (114), configured to perform random access on all or part of the component carriers configured upon the receiving module receiving the configuration message; and
a determining module (116), configured to determine, according to a result from the random access module, whether a carrier is successfully configured;
wherein the configuration message comprises one of: a component carrier allocation message of adding one or more component carriers, a component carrier activation message of adding one or more component carriers and a component carrier activation command of adding one or more component carriers, each message being sent from a base station to the apparatus;
**characterized by** the fact that the apparatus, configured to receive the component carrier allocation message/the component carrier activation message in the configuration message of the component carriers further comprises: based on whether the component carrier allocation message/the component carrier activation message is configured with dedicated random access resources on the one or more component carriers, or based on an indication of whether a timing advance of each of the one or more component carriers in the component carrier allocation message/the component carrier activation message is consistent with a corresponding serving component carrier, determining whether or not random access needs to be performed on the one or more component carriers;
wherein the apparatus, configured to receive the component carrier activation command in the configuration message of the component carriers comprises: based on whether the component carrier activation command is configured with dedicated random access resources on the one or more component carriers, or based on an indication of whether a timing advance of each of the one or more component carriers in the component carrier activation command is consistent with a corresponding serving component carrier, whether or not random access needs to be performed on the one or more component carriers.

7. The apparatus according to Claim 6, **characterized by** further comprising a configuring module (122) configured to configure the component carriers according to the configuration message of the component carriers.

## Patentansprüche

1. Verfahren zum Konfigurieren von Komponententrägern in Trägeraggregation, umfassend:
Empfangen, durch Anwenderendgerät (AE), einer Konfigurationsnachricht der Komponententräger (S101);
Durchführen eines Direktzugriffs auf alle oder einen Teil der Komponententräger (S102), und
Bestimmen, gemäß einem Ergebnis des Direktzugriffs, ob die Komponententräger erfolgreich konfiguriert sind (S103);
wobei die Konfigurationsnachricht eines umfasst aus: einer Komponententräger-Zuteilungsnachricht bezüglich Hinzufügens von einem oder mehreren Komponententrägern, einer Komponententräger-Aktivierungsnachricht bezüglich Hinzufügens von einem oder mehreren Komponententrägern, und einem Komponententräger-Aktivierungsbefehls bezüglich Hinzufügens von einem oder mehreren Komponententrägern, wobei jede Nachricht von einer Basisstation an das AE gesendet wird;
**dadurch gekennzeichnet, dass**
das Empfangen, durch das AE, der Komponententräger-Zuteilungsnachricht / der Komponententräger-Aktivierungsnachricht in der Konfigurationsnachricht des Komponententrägers weiter umfasst: basierend darauf, ob die Komponententräger-Zuteilungsnachricht / die Komponententräger-Aktivierungsnachricht mit dedizierten Direktzugriffsressourcen auf den einen oder mehrere Komponententräger konfiguriert ist, oder basierend auf einer Angabe desbezüglich, ob ein Timing Advance von jedem aus dem einen oder mehreren Komponententrägern in der Komponententräger-Zuteilungsnachricht / der Komponententräger-Aktivierungsnachricht mit einem entsprechenden dienenden Komponententräger übereinstimmt, Bestimmen, ob Direktzugriff auf den einen oder mehrere Komponententräger durchgeführt werden muss oder nicht;
wobei das Empfangen, durch das AE, des Komponententräger-Aktivierungsbefehls in der Konfigurationsnachricht des Komponententrägers umfasst: basierend darauf, ob der Komponententräger-Aktivierungsbefehl mit dedizierten Direktzugriffsressourcen auf den einen oder mehrere Komponententräger konfiguriert ist, oder basierend auf einer Angabe desbezüglich, ob ein Timing Advance von jedem aus dem einen oder mehreren Komponententrägern im Komponententräger-Aktivierungsbefehl mit einer entsprechenden dienenden Komponente übereinstimmt, Bestimmen, ob Direktzugriff auf den einen oder mehrere Komponententräger durchgeführt werden muss oder nicht.

2. Verfahren nach Anspruch 1, **dadurch gekennzeichnet, dass** jede aus der Komponententräger-Zuteilungsnachricht bezüglich Hinzufügens von einem oder mehreren Komponententrägern, und der Komponententräger-Aktivierungsnachricht bezüglich Hinzufügens von einem oder mehreren Komponententrägern, eine Funkressourcensteuerungs- (RRC) dedizierte Signalisierung ist, wobei
Konfiguration von jeder aus der Komponententräger-Zuteilungsnachricht und der Komponententräger-Aktivierungsnachricht eine Frequenz, eine physische Zellenkennung (PCI) und/oder Komponententräger-Kennungsinformationen, und/oder Timer-Informationen von jedem aus dem einen oder mehreren Komponententrägern einschließt, und weiter eines umfasst aus
dedizierten Direktzugriffsressourcen, einer Angabe desbezüglich, ob ein Timing Advance mit einem dienenden Komponententräger übereinstimmt, und einer Angabe desbezüglich, ob Direktzugriff auf den Komponententräger durchgeführt werden muss.

3. Verfahren nach Anspruch 1, **dadurch gekennzeichnet, dass** wenn das Bestimmungsergebnis lautet, dass Direktzugriff auf den einen oder mehrere Komponententräger durchgeführt werden muss, das Verfahren weiter umfasst:
das AE sendet eine Komponententräger-Zuteilungsabschlussnachricht / eine Komponententräger-Aktivierungsabschlussnachricht an die Basisstation gemäß einem Direktzugriffsergebnis auf jeden aus dem einen oder mehreren Komponententräger, bevor ein entsprechender Timer stoppt, wobei die Komponententräger-Zuteilungsabschlussnachricht / die Komponententräger-Aktivierungsabschlussnachricht Informationen bezüglich Komponententrägern einschließt, bei denen der Direktzugriff fehlschlug, oder Informationen bezüglich Komponententrägern, bei denen der Direktzugriff gelang, oder beides.

4. Verfahren nach Anspruch 1, **dadurch gekennzeichnet, dass** der Komponententräger-Aktivierungsbefehl bezüglich Hinzufügens von einem oder mehreren Komponententrägern ein Medienzugriffssteuerungselement (MAC CE) oder ein physikalischer Downlinksteuerkanal-Befehl (PDCCH-Befehl) ist, wobei
Konfiguration des Komponententräger-Aktivierungsbefehls eine Frequenz von jedem aus dem einen oder mehreren Komponententrägern, eine PCI und/oder Komponententräger-Kennungsinformationen umfasst, und weiter eines umfasst aus
dedizierten Direktzugriffsressourcen, einer Angabe desbezüglich, ob ein Timing Advance mit einem dienenden Komponententräger übereinstimmt, und einer Angabe desbezüglich, ob Direktzugriff auf den Komponententräger durchgeführt werden muss.

5. Verfahren nach Anspruch 1, **dadurch gekennzeichnet, dass** wenn das Bestimmungsergebnis lautet, dass der Direktzugriff auf den einen oder mehrere Komponententräger durchgeführt werden muss, das Verfahren weiter umfasst:
Bestimmen, durch das AE und die Basisstation, ob der eine oder mehrere Komponententräger erfolgreich aktiviert sind, gemäß einem Ergebnis des Direktzugriffs auf den einen oder mehrere Komponententräger.

6. Vorrichtung zum Konfigurieren von Komponententrägern in Trägeraggregation, umfassend:
ein Empfangsmodul (112), das dazu konfiguriert ist, eine Konfigurationsnachricht der Komponententräger zu empfangen;
ein Direktzugriffsmodul (114), das dazu konfiguriert ist, Direktzugriff auf alle oder einen Teil der Komponententräger durchzuführen, die bei Empfangen der Konfigurationsnachricht durch das Empfangsmodul konfiguriert werden; und
ein Bestimmungsmodul (116), das dazu konfiguriert ist, gemäß einem Ergebnis aus dem Direktzugriffsmodul zu bestimmen, ob ein Träger erfolgreich konfiguriert ist;
wobei die Konfigurationsnachricht eines umfasst aus: einer Komponententräger-Zuteilungsnachricht bezüglich Hinzufügens von einem oder mehreren Komponententrägern, einer Komponententräger-Aktivierungsnachricht bezüglich Hinzufügens von einem oder mehreren Komponententrägern, und einem Komponententräger-Aktivierungsbefehl bezüglich Hinzufügens von einem oder mehreren Komponententrägern, wobei jede Nachricht von einer Basisstation an die Vorrichtung gesendet wird;
**gekennzeichnet durch** die Tatsache, dass
die Vorrichtung, die dazu konfiguriert ist, die Komponententräger-Zuteilungsnachricht / die Komponententräger-Aktivierungsnachricht in der Konfigurationsnachricht der Komponententräger zu empfangen, weiter umfasst: basierend darauf, ob die Komponententräger-Zuteilungsnachricht / die Komponententräger-Aktivierungsnachricht mit dedizierten Direktzugriffsressourcen auf den einen oder mehrere Komponententräger konfiguriert ist, oder basierend auf einer Angabe desbezüglich, ob ein Timing Advance von jedem aus dem einen oder mehreren Komponententrägern in der Komponententräger-Zuteilungsnachricht / der Komponententräger-Aktivierungsnachricht mit einem entsprechenden dienenden Komponententräger übereinstimmt, Bestimmen, ob Direktzugriff auf den einen oder mehrere Komponententräger durchgeführt werden muss oder nicht;
wobei die Vorrichtung, die dazu konfiguriert ist, den Komponententräger-Aktivierungsbefehl in der Konfigurationsnachricht des Komponententrägers zu empfangen, umfasst: basierend darauf, ob der Komponententräger-Aktivierungsbefehl mit dedizierten Direktzugriffsressourcen auf den einen oder mehrere Komponententräger konfiguriert ist, oder basierend auf einer Angabe desbezüglich, ob ein Timing Advance von jedem aus dem einen oder mehreren Komponententrägern im Komponententräger-Aktivierungsbefehl mit einem entsprechenden dienenden Komponententräger übereinstimmt, Bestimmen, ob Direktzugriff auf den einen oder mehrere Komponententräger durchgeführt werden muss oder nicht.

7. Vorrichtung nach Anspruch 6, **dadurch gekennzeichnet, dass** sie weiter ein Konfigurationsmodul (122) umfasst, das dazu konfiguriert ist, die Komponententräger gemäß der Konfigurationsnachricht der Komponententräger zu konfigurieren.

## Revendications

1. Procédé de configuration de porteuses composantes en agrégation de porteuses, comprenant :
la réception par un équipement utilisateur (UE) d'un message de configuration des porteuses composantes (S101);
l'exécution d'un accès aléatoire sur la totalité ou une partie des porteuses composantes (S102), et
le fait de déterminer, en fonction d'un résultat de l'accès aléatoire, si les porteuses composantes sont configurées avec succès (S103) ;
dans lequel le message de configuration comprend un parmi : un message d'allocation de porteuse composante pour ajouter une ou plusieurs porteuses composantes, un message d'activation de porteuse composante pour ajouter une ou plusieurs porteuses composantes et une commande d'activation de porteuse composante pour ajouter une ou plusieurs porteuses composantes, chaque message étant transmis d'une station de base à l'UE ;
**caractérisé en ce que**
la réception par l'UE du message d'allocation de porteuse composante/message d'activation de porteuse composante dans le message de configuration des porteuses composantes comprend en outre : sur la base du fait que le message d'allocation de porteuse composante/le message d'activation de porteuse composante est configuré avec des ressources d'accès aléatoire dédiées sur les une ou plusieurs porteuses composantes, ou sur la base d'une indication du fait qu'une avance de synchronisation sur chacune des une ou plusieurs porteuses composantes dans le message d'allocation de porteuse composante/le message d'activation de porteuse composante est cohérente avec une porteuse composante de desserte correspondante, le fait de déterminer si un accès aléatoire doit ou non être effectué sur les une ou plusieurs porteuses composantes ;
dans lequel la réception par l'UE de la commande d'activation de porteuse composante dans le message de configuration des porteuses composantes comprend : sur la base du fait que la commande d'activation de porteuse composante est configurée avec des ressources d'accès aléatoire dédiées sur les une ou plusieurs porteuses composantes, ou sur la base d'une indication du fait qu'une avance de synchronisation sur chacune des une ou plusieurs porteuses composantes dans la commande d'activation de porteuse composante est cohérente avec une composante de desserte correspondante, le fait de déterminer si un accès aléatoire doit ou non être effectué sur les une ou plusieurs porteuses composantes.

2. Procédé selon la revendication 1, **caractérisé en ce que** chacun du message d'allocation de porteuse composante pour ajouter une ou plusieurs porteuses composantes et du message d'activation de porteuse composante pour ajouter une ou plusieurs porteuses composantes est une signalisation dédiée de commande de ressources radio (RRC), dans lequel
la configuration de chacun du message d'allocation de porteuse composante et du message d'activation de porteuse composante inclut une fréquence, une identité de cellule physique (PCI) et/ou des informations d'identification de porteuse composante, et/ou des informations de temporisateur de chacune des une ou plusieurs porteuses composantes, et comprend en outre l'une quelconque parmi
des ressources d'accès aléatoire dédiées, une indication du fait qu'une avance de synchronisation est cohérente avec une porteuse composante de desserte et une indication du fait qu'un accès aléatoire doit être effectué sur la porteuse composante.

3. Procédé selon la revendication 1, **caractérisé en ce que**, si ledit résultat de détermination est qu'un accès aléatoire doit être effectué sur les une ou plusieurs porteuses composantes, le procédé comprend en outre :
l'envoi par l'UE d'un message d'achèvement d'allocation de porteuse composante/d'un message d'achèvement d'activation de porteuse composante à la station de base en fonction d'un résultat d'accès aléatoire sur chacune des une ou plusieurs porteuses composantes avant qu'un temporisateur correspondant s'arrête, dans lequel le message d'achèvement d'allocation de porteuse composante/le message d'achèvement d'activation de porteuse composante comprend des informations de porteuses composantes sur lesquelles l'accès aléatoire a échoué, ou des informations de porteuses composantes sur lesquelles l'accès aléatoire a réussi, ou les deux.

4. Procédé selon la revendication 1, **caractérisé en ce que** la commande d'activation de porteuse composante pour ajouter une ou plusieurs porteuses composantes est un élément de commande d'accès au support (MAC CE) ou une commande de canal physique de commande de liaison descendante (commande PDCCH), dans lequel
une configuration de la commande d'activation de porteuse composante comprend une fréquence de chacune des une ou plusieurs porteuses composantes, une PCI et/ou des informations d'identification de porteuse composante, et comprend en outre l'une quelconque parmi
des ressources d'accès aléatoire dédiées, une indication du fait qu'une avance de synchronisation est cohérente avec une porteuse composante de desserte et une indication du fait qu'un accès aléatoire doit être effectué sur la porteuse composante.

5. Procédé selon la revendication 1, **caractérisé en ce que**, si ledit résultat de détermination est que l'accès aléatoire doit être effectué sur les une ou plusieurs porteuses composantes, le procédé comprend en outre :
le fait de déterminer par l'UE et la station de base si les une ou plusieurs porteuses composantes sont activées avec succès en fonction d'un résultat de l'accès aléatoire sur les une ou plusieurs porteuses composantes.

6. Dispositif de configuration de porteuses composantes en agrégation de porteuses, comprenant :
un module de réception (112) configuré pour recevoir un message de configuration des porteuses composantes ;
un module d'accès aléatoire (114) configuré pour effectuer un accès aléatoire sur la totalité ou une partie des porteuses composantes, configuré lors de la réception par le module de réception du message de configuration ; et
un module de détermination (116) configuré pour déterminer, en fonction d'un résultat provenant du module d'accès aléatoire, si une porteuse est configurée avec succès ;
dans lequel le message de configuration comprenant un parmi : un message d'allocation de porteuse composante pour ajouter une ou plusieurs porteuses composantes, un message d'activation de porteuse composante pour ajouter une ou plusieurs porteuses composantes et une commande d'activation de porteuse composante pour ajouter une ou plusieurs porteuses composantes, chaque message étant transmis d'une station de base au dispositif ;
**caractérisé en ce que**
le dispositif, configuré pour recevoir le message d'allocation de porteuse composante/le message d'activation de porteuse composante dans le message de configuration des porteuses composantes, comprend en outre : sur la base du fait que le message d'allocation de porteuse composante/le message d'activation de porteuse composante est configuré avec des ressources d'accès aléatoire dédiées sur les une ou plusieurs porteuses composantes, ou sur la base d'une indication du fait qu'une avance de synchronisation sur chacune des une ou plusieurs porteuses composantes dans le message d'allocation de porteuse composante/le message d'activation de porteuse composante est cohérente avec une porteuse composante de desserte correspondante, le fait de déterminer si un accès aléatoire doit ou non être effectué sur les une ou plusieurs porteuses composantes ;
dans lequel le dispositif configuré pour recevoir la commande d'activation de porteuse composante dans le message de configuration des porteuses composantes comprend : sur la base du fait que la commande d'activation de porteuse composante est configurée avec des ressources d'accès aléatoire dédiées sur les une ou plusieurs porteuses composantes, ou sur la base d'une indication du fait qu'une avance de synchronisation sur chacune des une ou plusieurs porteuses composantes dans la commande d'activation de porteuse composante est cohérente avec une porteuse composante de desserte correspondante, le fait de déterminer si un accès aléatoire doit ou non être effectué sur les une ou plusieurs porteuses composantes.

7. Dispositif selon la revendication 6, **caractérisé en ce qu'**il comprend en outre un module de configuration (122) configuré pour configurer les porteuses composantes en fonction du message de configuration des porteuses composantes.
